# FASCICULE DE BREVET EUROPEEN

(11) **EP 2 796 049 B1**
(45) Date de publication et mention de la délivrance du brevet: **01.11.2023**
(21) Numéro de dépôt: 14165086.1
(22) Date de dépôt: 17.04.2014
(51) Int. Cl.: A22C 29/00, A22C 29/04, B23K 26/08, B41M 5/24, B23K 103/00

(54) **Chaîne d'emballage avec moyens pour le marquage de mollusques et procédé correspondent**
Verpackungsline mit Mitteln zur Markierung von Weichtieren und entsprechendes Verfahren
Packaging line with means for marking molluscs and corresponding method

(30) Priorité: 22.04.2013 FR 1353654
(43) Date de publication de la demande: 29.10.2014
(73) Titulaire: Speciales Gillardeau, 17560 Bourcefranc-Le-Chapus (FR)
(72) Inventeur: Gillardeau, Véronique, 17390 Ronce Les Bains (FR); Gillardeau, Thierry, 17390 Ronce Les Bains (FR)
(74) Mandataire: Casalonga

(56) Documents cités:
- EP-A1- 1 994 830
- WO-A1-98/42197
- WO-A1-2009/128577
- WO-A1-2009/141002
- FR-A1- 2 962 300
- US-B1- 6 359 253

## Description

La présente invention concerne le marquage de mollusques à coquille externe, et plus particulièrement la gravure d'huîtres vivantes dans une chaîne d'emballage.

Généralement, les seules identifications permettant de renseigner un client sur l'origine d'une huître ou d'un autre mollusque sont celles présentes sur l'étiquette sanitaire ainsi que celles sur l'emballage. Mais il n'existe aucune information sur le produit en tant que tel, c'est-à-dire sur le mollusque.

Les documents EP 1 994 830 A1 et WO 2009/141002 A1 divulguent un procédé et un système d'identification d'un crustacé comprenant des moyens de gravure aptes à graver une empreinte sur une coquille et des moyens de commande aptes à commander la gravure de l'empreinte sur les coquilles des mollusques disposés dans des logements d'un plateau de chargement.

Le document WO 98/42197 A1 divulgue un procédé et une station d'orientation de mollusques à coquille externe comprenant des plateaux de chargement de mollusques à coquille externe dotés de logements de réception d'un mollusque et portés par un convoyeur de transfert.

L'invention propose de résoudre ce problème à l'aide d'un dispositif de marquage permettant de réaliser une identification systématique de chaque huître, ou de chaque mollusque, afin de garantir au consommateur final l'origine du produit de manière sûre, mais aussi de protéger le producteur contre d'éventuelles contrefaçons.

Selon un aspect de l'invention, il est proposé une chaîne d'emballage de mollusques à coquille externe selon la revendication 1 avec un dispositif de marquage de mollusques à coquille externe comprenant des moyens de gravure par laser aptes à graver une empreinte sur une coquille, et des moyens de commande aptes à commander la gravure de l'empreinte sur les coquilles des mollusques disposés dans des logements d'un plateau de chargement.

La coquille d'une huître est formée de couches de matières minérales et organiques. Elle présente des colorations, des épaisseurs, et des duretés très variables selon l'origine des huîtres. Le caractère multicolore de la coquille d'huître ne permet pas d'obtenir systématiquement une lisibilité optimale avec des méthodes de marquage courantes comme une impression à jet d'encre et ce quelle que soit l'encre utilisée. Ce problème se retrouve également pour le marquage d'autres mollusques.

La gravure par laser permet de réaliser un marquage par soustraction de matière. Le retrait de matière à la surface de la coquille d'une huître ou d'un autre mollusque permet d'obtenir un contraste de couleur permettant de rendre le marquage visible par différenciation de manière nette et de faciliter sa lecture quelle que soit la couleur de la coquille.

L'empreinte gravée sur la coquille peut être par exemple une marque ou un logo, une date, ou bien un code d'identification unique pour chaque huître, comme un numéro d'identification, un code barre, ou tout autre code identifiant.

De préférence, les moyens de gravure par laser comprennent au moins un laser à dioxyde de carbone d'une puissance comprise entre 50 W et 70 W, et plus particulièrement de 60 W.

L'utilisation d'un laser à dioxyde de carbone d'une puissance de 60 W permet d'éviter tout risque de perçage de la coquille d'une huître lors de la gravure, et de préserver l'huître vivante en évitant en outre une exposition prolongée à la source de chaleur. Pour d'autres mollusques, la puissance peut être adaptée en fonction du type et de l'épaisseur de la coquille du mollusque.

Dans un mode de réalisation, les moyens de gravure laser comprennent un nombre de laser équivalent au nombre de logements d'un plateau de chargement d'un convoyeur de transfert, les lasers étant disposés de manière à être respectivement en regard d'un logement lorsqu'un plateau de chargement est placé en regard du dispositif de marquage.

La pluralité de lasers utilisés permet de réduire le temps de gravure et d'augmenter la cadence sur une ligne de marquage d'une chaîne d'emballage.

Dans une variante, les moyens de gravure laser comprennent un seul laser et des moyens de translation aptes à déplacer le laser en regard de chaque logement d'un plateau de chargement d'un convoyeur de transfert pour graver chaque mollusque du plateau.

Dans une autre variante, les moyens de gravure laser comprennent un seul laser associé à des éléments optiques orientables et déplaçables de manière à permettre la gravure successive des six mollusques d'un même plateau sans déplacer le laser.

L'utilisation d'un seul laser permet de réduire le coût financier de revient du dispositif de marquage.

Selon une caractéristique générale, la chaîne d'emballage comprend des plateaux de chargement de mollusques à coquille externe dotés de logements de réception d'un mollusque et portés par un convoyeur de transfert, et un dispositif de marquage tel que défini précédemment apte à graver une empreinte sur la coquille de chaque mollusque disposé sur un plateau de chargement.

Pour assurer le transfert des produits vers le poste de marquage, le convoyeur peut être un convoyeur de type hippodrome.

De préférence, les plateaux de chargement comprennent des surfaces antidérapantes dans le fond de chaque logement.

La taille et la forme varie beaucoup d'une huître à une autre. La taille varie selon les trois dimensions : longueur, largeur et épaisseur. Ce paramètre génère des problèmes de stabilité et de positionnement de l'huître avant et pendant la phase de marquage, engendrant des rebuts.

En utilisant sur le convoyeur des plateaux comportant des logements individuels, il est possible de limiter ces phénomènes. Les logements individuels sont adaptés pour recevoir des mollusques de différentes tailles, et notamment des huîtres de n'importe quel calibre. Pour cela, les logements individuels ont par exemple chacun une taille permettant de recevoir une huître du calibre le plus grand.

Le mollusque est disposé de manière à avoir la surface la plus plane en contact avec la surface antidérapante. L'huître, par exemple, est disposée dans le logement de manière à ce que la face de sa coquille ayant une surface plane soit en contact avec la surface antidérapante du logement.

Avantageusement, chaque logement d'un plateau de chargement peut comprendre au moins deux tasseaux de positionnement définissant au moins un angle du logement et apte à maintenir un mollusque dans le logement.

La disposition du mollusque en butée contre les deux tasseaux formant un angle du logement permet de s'assurer du calage et du centrage du mollusque selon les trois axes, tout en limitant le phénomène de glissement.

La chaîne d'emballage peut également comprendre des moyens de cadencement de ligne aptes à faire avancer les plateaux séquentiellement de sorte qu'un plateau soit à l'arrêt lorsque le dispositif de marquage opère sur les huîtres du plateau.

Les moyens de cadencement peuvent commander le convoyeur de transfert de sorte que celui-ci fasse avancer les plateaux de chargement de manière séquentielle. Les moyens de cadencement peuvent également être couplés au dispositif de marquage de manière à synchroniser le déplacement des plateaux et la gravure des mollusques des plateaux.

Selon un encore autre aspect de l'invention, il est proposé un procédé d'emballage de mollusques à coquille externe selon la revendication 10 comprenant un chargement de mollusques sur un plateau de chargement, un déplacement du plateau par un convoyeur de transfert, et un marquage de la coquille des mollusques.

Le marquage peut être réalisé par laser.

Avantageusement, le déplacement peut être cadencé séquentiellement de manière à marquer un temps d'arrêt après chaque déplacement de plateau par le convoyeur de transfert.

D'autres avantages et caractéristiques de l'invention apparaîtront à l'examen de la description détaillée d'un mode de réalisation et d'un mode de mise en oeuvre, nullement limitatifs, et des dessins annexés, sur lesquels :
- la figure 1 illustre, de manière schématique, une vue en perspective d'un convoyeur de transfert muni de plateaux de chargement de mollusques selon un mode de réalisation de l'invention ;
- la figure 2 illustre schématiquement une vue de dessus d'un plateau de chargement de mollusques du convoyeur de la figure 1 ;
- la figure 3 présente schématiquement une ligne de marquage d'une chaîne d'emballage comprenant le convoyeur de transfert de la figure 1 ;
- la figure 4 représente un organigramme d'un procédé d'emballage de mollusques selon un mode de mise en oeuvre de l'invention.

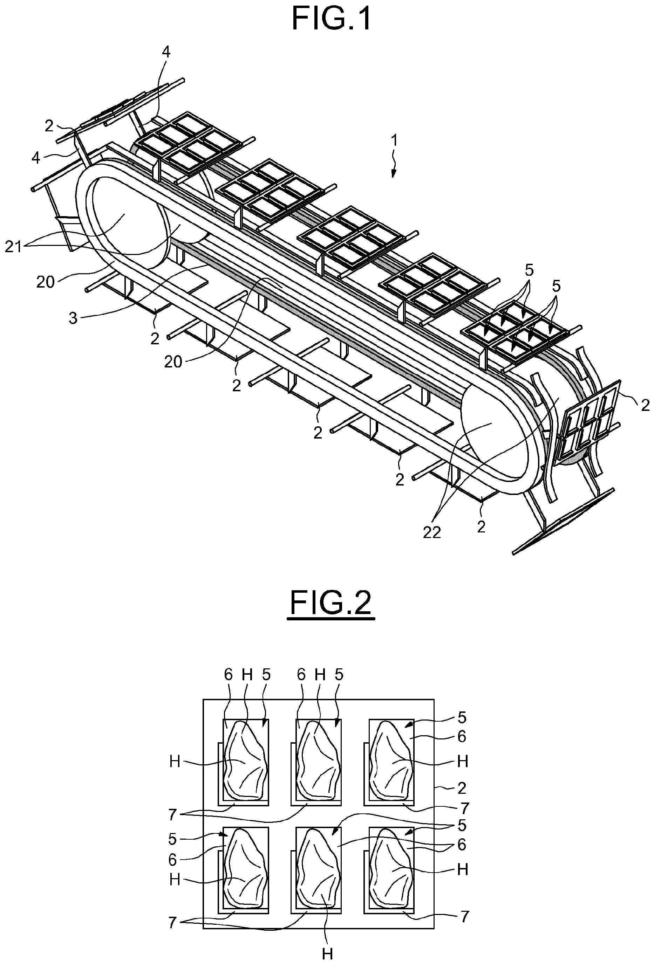

Sur la figure 1 est représentée schématiquement une vue en perspective d'un convoyeur de transfert 1 muni de plateaux 2 de chargement de mollusques, et plus particulièrement d'huîtres, selon un mode de réalisation de l'invention.

Le convoyeur de transfert 1 est un convoyeur à chaînes comprenant un châssis non représenté constitués de guides 20 assurant le soutient de deux chaînes 3 de transfert. Les chaînes 3 sont munies de plots 4 sur lesquels sont fixés les plateaux 2 de chargement. Les chaînes 3 sont montées sur deux pignons crantés 21 et 22 disposées à chacun à une extrémité du convoyeur 1, un des pignons 21 étant motorisé de manière à générer le mouvement d'entraînement du convoyeur 1.

Dans le mode de réalisation illustré sur la figure 1, chaque plateau 2 de chargement comprend six logements 5 individuels. Comme cela est illustré sur la figure 2, qui représente une vue de dessus d'un plateau 2 de chargement d'huîtres *H,* chaque logement 5 du plateau 2 de chargement comprend une surface 6 antidérapante et deux tasseaux 7 définissant un angle du logement 5.

La surface 6 antidérapante est disposée sur toute la surface du logement 5 de manière à maintenir l'huître *H* en position et éviter tout glissement de l'huître *H* lors du déplacement du plateau 2. Pour maximiser l'adhérence de l'huître *H* sur la surface 6 antidérapante du logement 5, la face possédant la surface la plus plane de la coquille d'huître *H* est placée en contact de la surface 6 antidérapante.

De plus, en recouvrant toute la surface du logement 5 d'une telle surface 6 antidérapante, une huître *H* de n'importe quel calibre peut être placée dans le logement 5 et être correctement maintenue en position.

Pour augmenter le maintien en position de l'huître *H* ainsi que pour centrer l'huître *H* dans le logement 5, les tasseaux 7 sont disposés sur deux bords formant un même angle du logement 5 de manière à définir un rebord de coin. Chaque huître *H* est ainsi placée dans un logement 5 avec la face plane en contact avec la surface antidérapante 6 et de manière à être en contact avec les deux tasseaux 7.

Les huîtres *H* sont triées par calibre avant d'être amenées et disposées sur les plateaux 2 du convoyeur de transfert 1, de sorte que lors d'une session de marquage, les huîtres *H* d'un même calibre sont gravées. Ainsi, en positionnant les huîtres *H* contre les deux tasseaux 7, on s'assure que la gravure est systématiquement réalisée sur la même région de la coquille.

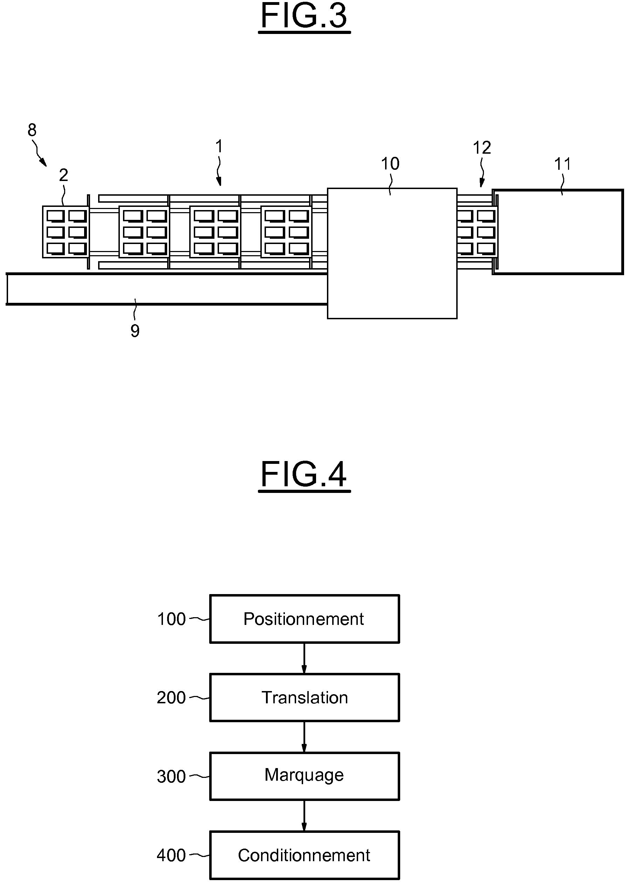

Sur la figure 3 est illustrée une ligne de marquage 8 d'une chaîne d'emballage comprenant le convoyeur de transfert 1 de la figure 1.

La ligne de marquage 8 comprend le convoyeur de transfert 1, un convoyeur d'alimentation 9 délivrant des huîtres d'un même calibre, un dispositif de marquage 10 et un bac 11 de récupération des huîtres marquées.

Le convoyeur d'alimentation 9 est juxtaposé parallèlement au convoyeur de transfert 1. De cette manière, un ou plusieurs utilisateurs peuvent répartir les huîtres acheminées par le convoyeur d'alimentation 9 dans les logements 5 des plateaux 2 de chargement du convoyeur 1 de transfert.

Les huîtres ainsi disposées et centrées grâce aux tasseaux 7 dans les logements 5 des plateaux 2 de chargement sont acheminées par le convoyeur 1 de transfert jusqu'au dispositif de marquage 10.

Le dispositif de marquage 10 est disposé au-dessus du convoyeur 1 de transfert sur une région proche de l'extrémité de sortie 12 du convoyeur 1 de transfert. Le dispositif de marquage 10 comprend, dans ce mode de réalisation, six lasers à dioxyde de carbone montés de manière à être chacun en regard d'un logement 5 d'un plateau 2 lorsqu'un plateau 2 de chargement est positionné sous le dispositif de marquage 10. Bien entendu, le nombre de lasers correspond à celui des logements 5 des plateaux de chargement 2. Les lasers ont une puissance comprise entre 50 W et 70 W et de préférence d'environ 60 W pour permettre une gravure visible de la coquille sans risquer de percer la coquille de l'huître.

Le dispositif de marquage 10 comprend des moyens de positionnement des lasers permettant de déplacer tous les lasers ensemble de sorte qu'il soit chaque en regard d'une même zone de logement 5.

Le dispositif de marquage 10 comprend également des moyens de commande permettant de commander la gravure d'une empreinte sur les coquilles des huîtres disposées dans les logements 5 d'un plateau de chargement 2. Les moyens de commandent ont un module paramétrable permettant de définir l'empreinte à graver et un module de synchronisation permettant de synchroniser le déplacement du convoyeur de transfert 1 avec les lasers du dispositif de marquage 10.

Dans ce mode de réalisation, le convoyeur de transfert 1 est cadencé de manière à marquer un temps d'arrêt entre chaque déplacement des chaînes 3 portant les plateaux 2 de chargement. Un tel cadencement du convoyeur de transfert 1 permet de conserver chaque plateau 2 de chargement immobile sous le dispositif de marquage 10 pendant une période temps nécessaire à la gravure de l'empreinte sur la coquille des huîtres.

Une fois l'empreinte gravée sur les huîtres d'un plateau 2 de chargement, le convoyeur de transfert 1 est actionné de manière à amener un autre plateau 2 de chargement sous le dispositif de marquage 10. Le plateau 2 de chargement dont les huîtres ont été gravées est amené simultanément à l'extrémité de sortie 12 du convoyeur de transfert 1 de sorte que les huîtres soient déchargées dans le bac 11 de récupération. Lorsque le plateau 2 de chargement est amené sur l'extrémité de sortie 12 du convoyeur 1 de transfert, le plateau 2 bascule de manière à déverser les huîtres dans le bac 11.

Le bac 11 peut comprendre une bourriche disposée de manière à recevoir les six huîtres marquées. La bourriche est ensuite fermée après avoir reçue un multiple de six huitres et remplacée par une autre bourriche prête à recevoir les huîtres marquées suivantes.

Sur la figure 4 est présenté un organigramme d'un procédé d'emballage de mollusques selon un mode de mise en oeuvre de l'invention.

Dans une première étape 100, on dispose un mollusque de manière centrée dans chacun des logements 5 d'un plateau de chargement 2 d'un convoyeur de transfert 1.

Dans une étape suivante 200, le convoyeur de transfert 1 achemine le plateau 2 ainsi chargé jusqu'à une position dans laquelle les mollusques disposés dans les logements 5 du plateau 2 sont chacun en regard d'un laser à dioxyde de carbone d'un dispositif de marquage 10. Le déplacement du plateau 2 est réalisée de manière cadencée par le convoyeur de transfert 1, c'est-à-dire de manière séquentielle, de sorte qu'un temps d'arrêt du plateau 2 précède un nouveau déplacement.

Dans une étape 300, on grave les huîtres du plateau disposé sous le dispositif de marquage 10. La gravure est réalisée en réglant les lasers sur une puissance de 60 W et en respectant un temps d'exposition suffisant pour graver l'empreinte sans percer la coquille ou exposer l'huître à une quantité de chaleur totale trop importante.

Dans une étape finale 400, on décharge les huîtres marquées dans un bac 11 de récupération pour conditionner les huîtres et finaliser l'emballage d'une bourriche d'huîtres.

L'invention permet ainsi de réaliser une identification systématique de mollusques à même leur coquille à l'aide d'une chaîne d'emballage comportant un dispositif de marquage permettant ainsi de garantir au consommateur final l'origine du produit de manière sûre, mais aussi de protéger le producteur contre d'éventuelles contrefaçon.

On notera enfin que l'invention n'est pas limitée au mode de réalisation précédent, mais à l'objet des revendications annexées. En effet, dans le dispositif de marquage décrit, les moyens de gravure comportent un ensemble de lasers dont le nombre correspond au nombre de logements du plateau de chargement.

Bien entendu, on ne sort pas du cadre de l'invention lorsque les moyens de gravure du dispositif de marquage comprennent un seul laser et des moyens de translation aptes à déplacer le laser en regard de chaque logement d'un plateau de chargement d'un convoyeur de transfert pour graver chaque mollusque du plateau de chargement.

## Revendications

1. Chaîne d'emballage de mollusques à coquille externe, comprenant des plateaux de chargement (2) de mollusques à coquille externe dotés de logements (5) de réception d'un mollusque et portés par un convoyeur de transfert (1), ainsi qu'un dispositif de marquage (10) de chaque mollusque à coquille externe disposé sur un plateau de chargement (2) comprenant des moyens de gravure aptes à graver une empreinte sur une coquille et des moyens de commande aptes à commander la gravure de l'empreinte sur les coquilles des mollusques disposés dans des logements d'un plateau de chargement (2).

2. Chaîne d'emballage selon la revendication 1, dans lequel les moyens de gravure du dispositif de marquage (10) comprennent au moins un laser apte à graver une empreinte sur une coquille de mollusque.

3. Chaîne d'emballage selon l'une des revendications 1 ou 2, dans lequel les moyens de gravure du dispositif de marquage (10) comprennent au moins un laser à dioxyde de carbone d'une puissance comprise entre 50 W et 70 W, et plus particulièrement de 60 W.

4. Chaîne d'emballage selon l'une des revendications 2 ou 3, dans lequel les moyens de gravure du dispositif de marquage (10) comprennent un nombre de laser équivalent au nombre de logements (5) d'un plateau de chargement (2) d'un convoyeur de transfert (1), les lasers étant disposés de manière à être respectivement en regard d'un logement (5) lorsqu'un plateau de chargement (2) est placé en regard du dispositif de marquage (10).

5. Chaîne d'emballage selon l'une des revendications 2 ou 3, dans lequel les moyens de gravure laser du dispositif de marquage (10) comprennent un seul laser et des moyens de translation aptes à déplacer le laser en regard de chaque logement (5) d'un plateau de chargement (2) d'un convoyeur de transfert (1) pour graver chaque mollusque du plateau de chargement (2).

6. Chaîne d'emballage selon l'une des revendications 2 ou 3, dans lequel les moyens de gravure laser du dispositif de marquage (10) comprennent un seul laser et des éléments optiques orientables et déplaçables de manière à permettre la gravure successive des six mollusques d'un même plateau sans déplacer le laser.

7. Chaîne d'emballage selon l'une des revendications 1 à 6, dans laquelle les plateaux de chargement (2) comprennent des surfaces antidérapantes (6) dans le fond de chaque logement (5).

8. Chaîne d'emballage selon l'une des revendications 1 à 7, dans laquelle chaque logement (5) d'un plateau de chargement (2) comprend au moins deux tasseaux (7) de positionnement définissant au moins un angle du logement (5) et apte à maintenir un mollusque dans le logement (5).

9. Chaîne d'emballage selon l'une des revendications 1 à 8, comprenant des moyens de cadencement de ligne aptes à faire avancer les plateaux (2) séquentiellement de sorte qu'un plateau (2) soit à l'arrêt lorsque le dispositif de marquage (10) opère sur les huîtres du plateau (2).

10. Procédé d'emballage de mollusques à coquille externe comprenant un chargement de mollusques sur un plateau de chargement (2) dotés de logements (5) de réception d'un mollusque, et un déplacement du plateau (2) par un convoyeur de transfert (1), ainsi que la commande de moyens de gravure pour graver une empreinte sur les coquilles des mollusques disposées dans les logements du plateau de chargement et la gravure par les moyens de gravure de l'empreinte sur les coquilles des mollusques disposées dans les logements du plateau de chargement.

11. Procédé selon la revendication 10, dans lequel le marquage est réalisé par laser.

12. Procédé selon l'une des revendications 10 ou 11, dans lequel le déplacement est cadencé séquentiellement de manière à marquer un temps d'arrêt après chaque déplacement de plateau (2) par le convoyeur de transfert (1).

## Patentansprüche

1. Verpackungslinie für Weichtiere mit einer äußeren Schale, umfassend Ladeplatten (2) für Weichtiere mit einer äußeren Schale, die mit Fächern (5) zur Aufnahme eines Weichtiers versehen sind und von einem Transferförderband (1) getragen werden, sowie eine Markierungsvorrichtung (10) für jedes Weichtier mit einer äußeren Schale, die auf einer Ladeplatte (2) angeordnet ist und Gravurmittel, die dazu in der Lage sind, einen Abdruck auf eine Schale zu gravieren, und ein Steuermittel umfasst, das dazu in der Lage ist, die Gravur des Abdrucks auf den Schalen der Weichtiere, die in den Fächern in einer Ladeplatte (2) angeordnet sind, zu steuern.

2. Verpackungslinie nach Anspruch 1, wobei die Gravurmittel der Markierungsvorrichtung (10) mindestens einen Laser umfassen, der dazu in der Lage ist, einen Abdruck auf ein Weichtier zu gravieren.

3. Verpackungslinie nach einem der Ansprüche 1 oder 2, wobei die Gravurmittel der Markierungsvorrichtung (10) mindestens einen Kohlendioxidlaser mit einer Leistung zwischen 50 W und 70 W, und insbesondere von 60 W, umfassen.

4. Verpackungslinie nach einem der Ansprüche 2 oder 3, wobei die Gravurmittel der Markierungsvorrichtung (10) eine Anzahl von Lasern umfassen, die der Anzahl von Fächern (5) in einer Ladeplatte (2) eines Transferförderbands (1) entspricht, wobei die Laser so angeordnet sind, dass sie sich jeweils gegenüber einem Fach (5) befinden, wenn eine Ladeplatte (2) gegenüber der Markierungsvorrichtung (10) positioniert ist.

5. Verpackungslinie nach einem der Ansprüche 2 oder 3, wobei die Lasergravurmittel der Markierungsvorrichtung (10) einen einzelnen Laser und ein Translationsbewegungsmittel umfassen, das dazu in der Lage ist, den Laser gegenüber jedem Fach (5) in einer Ladeplatte (2) eines Transferförderbands (1) zu bewegen, um jedes Weichtier auf der Ladeplatte (2) zu gravieren.

6. Verpackungslinie nach einem der Ansprüche 2 oder 3, wobei die Lasergravurmittel der Markierungsvorrichtung (10) einen einzelnen Laser und optische Elemente umfassen, die ausrichtbar und beweglich sind, um die Gravur von sechs Weichtieren nacheinander auf einer einzigen Platte ohne das Bewegen des Lasers zu ermöglichen.

7. Verpackungslinie nach einem der Ansprüche 1 bis 6, wobei die Ladeplatten (2) rutschfeste Oberflächen (6) auf dem Boden jedes Fachs (5) umfassen.

8. Verpackungslinie nach einem der Ansprüche 1 bis 7, wobei jedes Fach (5) in einer Ladeplatte (2) mindestens zwei Positionierungsleisten (7) umfasst, die mindestens einen Winkel des Fachs (5) definieren und dazu in der Lage sind, ein Weichtier in dem Fach (5) zu halten.

9. Verpackungslinie nach einem der Ansprüche 1 bis 8, umfassend ein Linientaktmittel, das dazu in der Lage ist, die Platten (2) derart nacheinander voranzuschieben, dass eine Platte (2) im Stillstand ist, wenn die Markierungsvorrichtung (10) an den Austern in der Platte (2) arbeitet.

10. Verfahren zum Verpacken von Weichtieren mit einer äußeren Schale, umfassend das Laden von Weichtieren auf eine Ladeplatte (2), die mit Fächern (5) zur Aufnahme von Weichtieren versehen ist, und das Bewegen der Platte (2) durch ein Transferförderband (1), sowie die Gravursteuermittel zum Gravieren eines Abdrucks auf den Schalen der Weichtiere, die in den Fächern in der Ladeplatte angeordnet sind, und der Gravur durch die Gravurmittel des Abdrucks auf den Schalen der Weichtiere, die in den Fächern in der Ladeplatte angeordnet sind.

11. Verfahren nach Anspruch 10, wobei die Markierung mittels Laser durchgeführt wird.

12. Verfahren nach einem der Ansprüche 10 oder 11, wobei die Bewegung aufeinanderfolgend getaktet ist, um nach jeder Bewegung der Platte (2) durch das Transferförderband (1) in einer Stillstandzeit zu markieren.

## Claims

1. A packaging line for external shell molluscs, comprising loading trays (2) for external shell molluscs provided with housings (5) for receiving a mollusc and carried by a transfer conveyor (1), as well as a marking device (10) for each external shell mollusc disposed on a loading tray (2) comprising engraving means capable of engraving an imprint on a shell and control means capable of controlling the engraving of the imprint on the shells of molluscs disposed in housings of a loading tray (2).

2. The packaging line according to claim 1, wherein the engraving means of the marking device (10) comprise at least one laser capable of engraving an imprint on a mollusc shell.

3. The packaging line according to one of claims 1 or 2, wherein the engraving means of the marking device (10) comprise at least one carbon dioxide laser with a power comprised between 50 W and 70 W, and more particularly 60 W.

4. The packaging line according to one of claims 2 or 3, wherein the engraving means of the marking device (10) comprise a laser number equivalent to the number of housings (5) of a loading tray (2) of a transfer conveyor (1), the lasers being disposed so as to be respectively facing a housing (5) when a loading tray (2) is placed facing the marking device (10).

5. The packaging line according to one of claims 2 or 3, wherein the laser engraving means of the marking device (10) comprise a single laser and translation means capable of moving the laser facing each housing (5) of a loading tray (2) of a transfer conveyor (1) to engrave each mollusc from the loading tray (2).

6. The packaging line according to one of claims 2 or 3, wherein the laser engraving means of the marking device (10) comprise a single laser and optical elements which can be orientated and movable so as to allow the successive engraving of the six molluscs from the same tray without moving the laser.

7. The packaging line according to one of claims 1 to 6, wherein the loading trays (2) comprise non-slip surfaces (6) in the bottom of each housing (5).

8. The packaging line according to one of claims 1 to 7, wherein each housing (5) of a loading tray (2) comprises at least two positioning battens (7) defining at least one angle of the housing (5) and capable of maintaining a mollusc in the housing (5).

9. The packaging line according to one of claims 1 to 8, comprising line timing means capable of moving the trays (2) forward sequentially so that a tray (2) is stopped when the marking device (10) operates on the oysters of the tray (2).

10. A method for packaging external shell molluscs comprising loading molluscs onto a loading tray (2) provided with housings (5) for receiving a mollusc, and moving the tray (2) by a transfer conveyor (1), as well as the control of engraving means to engrave an imprint on the shells of the molluscs disposed in the housings of the loading plate and the engraving by the means for engraving the imprint on the shells of the molluscs disposed in the loading tray housings.

11. The method according to claim 10, wherein the marking is carried out by laser.

12. The method according to one of claims 10 or 11, wherein the movement is timed sequentially so as to mark a stopping time after each movement of the tray (2) by the transfer conveyor (1).
